# EUROPEAN PATENT SPECIFICATION

(11) **EP 0 386 956 B1**
(45) Date of publication and mention of the grant of the patent: **01.06.1994**
(21) Application number: 90302246.5
(22) Date of filing: 02.03.1990
(51) Int. Cl.: B60B 33/00, F16N 31/00

(54) **Castors**
Lenkrolle
Roulettes à pivot

(30) Priority: 09.03.1989 GB 8905404; 10.11.1989 GB 8925417
(43) Date of publication of application: 12.09.1990
(73) Proprietor: GUY-RAYMOND ENGINEERING COMPANY LIMITED, King's Lynn Norfolk PE30 4LX (GB)
(72) Inventor: Daniels, Raymond Robert James, King's Lynn, Norfolk PE30 4LX (GB)
(74) Representative: Abbie, Andrew Kenneth

(56) References cited:
- EP-A- 0 192 387
- DE-A- 2 640 018
- FR-A- 2 281 238
- US-A- 3 235 901
- Schmid E: "Handbuch der Dichtungstechnik" no. 232/81, 1981, Expert Verlag,
- Grafenau,DE

## Description

This invention relates to castors, and more particularly to castors comprising a wheel rotatably mounted to a body member by a spindle which extends from a spindle mount carried by the body member into a closed bore in a central boss of the wheel.

Such a castor is disclosed in our EP-A-0 192 387 (GB-A-2171897). In such castors grease is normally provided between the surface of the closed bore of the wheel's central boss and the end of the spindle received therewithin. If too much grease is provided, there is a tendency for it to seep from the axial gap between the boss at the open end of the bore and the spindle mount. This in itself may cause problems in use, but in any event, when the castor wheel and/or body member are made of electrically chargeable material, such as synthetic plastics, dust, fluff and other debris tends to adhere to the seeped grease until such time as the accumulated mass dislodges from the castor to become deposited on and spoil the floor surface on which the castor is being used. This is particularly disadvantageous when the floor surface is a light-coloured carpet.

In order to mitigate the above-mentioned problem and/or allow greater tolerance in the amount of grease provided between the closed bore of the central boss of the wheel and the spindle, we have now provided a castor comprising a wheel rotatably mounted to a body member by a spindle which extends from a spindle mount carried by the body member into a closed bore in a central boss of the wheel, grease being provided between the closed bore of the boss and the spindle, characterized in that a shroud means shrouding the boss and/or spindle mount bridges the axial gap therebetween and extends the seepage path for said grease provided between the closed bore of the boss and the spindle.

In one embodiment of the invention, the shroud means is integral with the spindle mount and extends about an end portion of the boss from which the spindle emerges. In this embodiment the shroud means may advantageously be formed as a counterbore in said spindle mount for receiving said boss end portion.

In the above-mentioned embodiment, the boss end portion has an external surface which is circular in cross-section and the shroud means has an internal surface which is also circular to allow rotation of the boss end portion relative to the shroud means. In a modified embodiment, the shroud means has an internal surface which is substantially oval in cross-section to allow vertical movement of the boss end portion relative to the shroud means in addition to the aforementioned relative rotation.

In another embodiment the shroud means is integral with the boss and extends about an end portion of the spindle mount from which the spindle extends. In this embodiment the shroud means is formed by a counterbore in said boss for receiving said spindle mount end portion.

In another embodiment, the shroud means is a tubular element, respective opposite end portions of which receive an end portion of the boss from which the spindle emerges and an end portion of the spindle mount from which the spindle extends. The above-mentioned tubular element may be resilient and/or formed of a grease absorbent material.

In all of the illustrated embodiments the spindle mount is integral with the body portion of the castor, but it is to be understood that this is not essential since for example the spindle mount may be carried by the body member for relative movement thereto, as for example in an arrangement as disclosed in our British patent specification 2195237.

In order that the invention may be better understood, the above-mentioned embodiments thereof, which are given by way of example only, will now be described with reference to the accompanying drawings, in which:
Figures 1 to 3 are respectively side, front and top plan views of a twin wheel castor;
Figure 4 is a cross-sectional view of the same castor;
Figure 5 is a perspective fragmentary exploded view showing the body member and a wheel of the castor;
Figure 6 is a view similar to Figure 5 of a modified castor; and
Figures 7 and 8 are respective views similar to Figure 4 of two other castors.

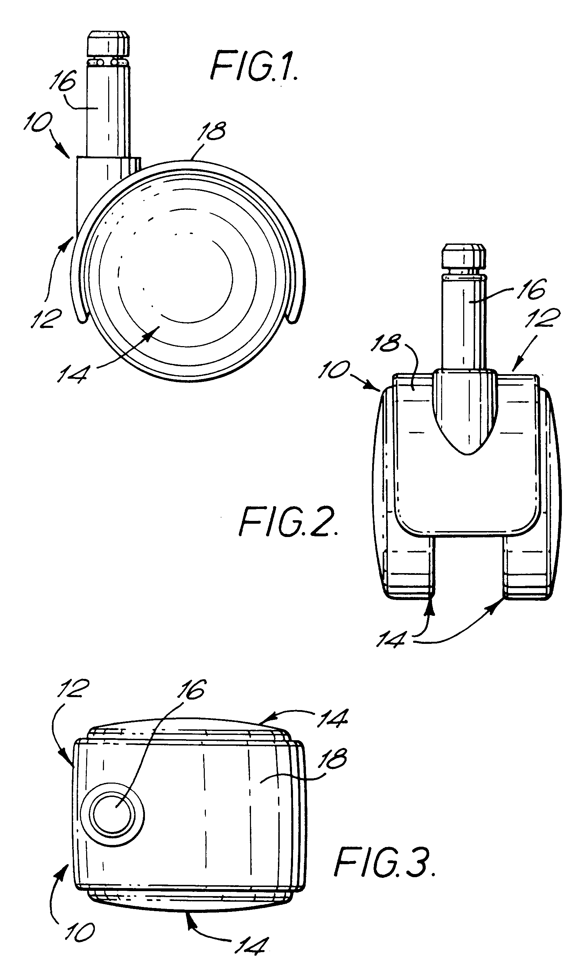

Referring first to Figures 1 to 3, the illustrated castor 10 generally comprises a body member 12, of a plastics material, for example a polyamide, or a metal, two plastics castor wheels 14 mounted to the body and a metal stem 16 extending from and rotatable in the body 12 for mounting the castor on a piece of furniture. The body 12 also includes a hood 18 which extends over the wheels.

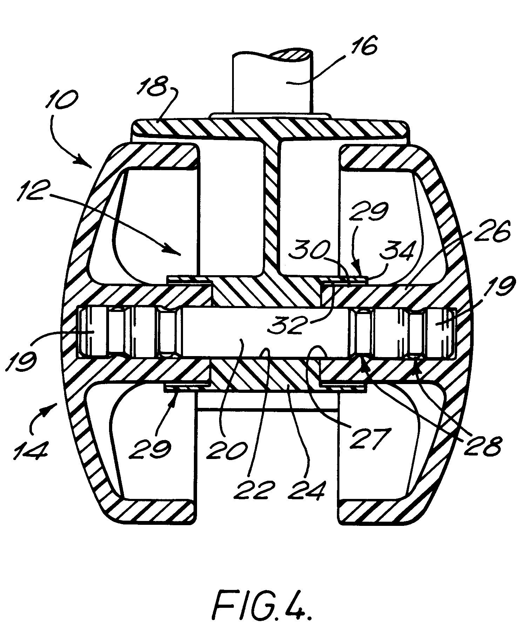

Referring now to Figure 4, the two wheels 14 are rotatably mounted on respective end portions 19 of a spindle 20, which is mounted in a through-bore 22 of a spindle mount 24 of the body 12 so as to extend from the spindle mount on each side thereof. As illustrated, the spindle mount 24 is integral with the body and formed as a boss. Each wheel 14 is provided with a respective central boss 26 provided with a closed bore 27 into which the spindle end 19 extends. Each wheel is axially retained on its respective spindle end portion 19, by interengaging groove and rib means 28 of the spindle end portion and closed bore of the boss. As illustrated, these groove and rib means take the form disclosed in our aforementioned UK Patent 2171897. Specifically, each closed bore is formed with two radially inwardly projecting circumferentially extending annular ribs which are spaced along the bore and which are received in annular grooves in the spindle end portion. Furthermore, the circumferentially extending annular ribs formed in the bore are provided with gaps in their circumferential extents for the reasons disclosed in the above-mentioned UK patent, which reasons include allowing grease deposited in the bore before the spindle is inserted to be spread evenly over the wall of the bore and complementary surfaces of the spindle during insertion of the spindle end portion into the bore.

As mentioned previously seepage of grease from the axial gap between the end portion of the boss 26 adjacent the open end of the bore and the spindle mount 24 may occur if too much grease is initially deposited in the bore, thus resulting in the aforementioned problem of fluff, dust and other debris becoming adhered to that grease and eventually accumulating into a mass which becomes dislodged from the castor and drops to the floor. In order to avoid this problem, the illustrated castors are each provided with a respective shroud means associated with each wheel 14 shrouding the wheel boss and/or the spindle mount which bridges the axial gap therebetween and extends the seepage path for grease provided between the closed bore of the wheel boss and the spindle.

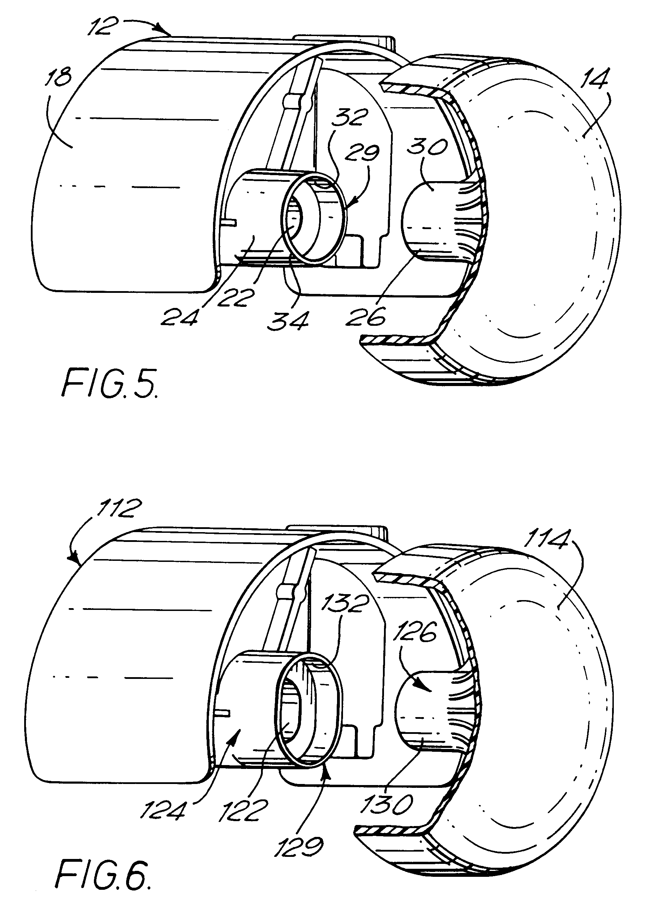

In the embodiment shown in Figures 1 to 5 the shroud means is integral with the spindle mount 24 and extends about the end portion of the wheel boss 26 from which the spindle emerges. The shroud means is designated 29 in Figures 4 and 5 and is formed by a counterbore in the spindle mount 24 for receiving the wheel boss end portion. The external surface 30 of the wheel boss end portion and the internal surface 32 of the shroud 29 are each circular in cross-section to allow rotation of the wheel boss relative to the shroud. The arrangement extends the seepage path for grease axially beyond the axial gap between the wheel boss 26 and spindle mount 24 over the wheel boss end portion between the surfaces 30 and 32 to the free end 34 of the shroud 29. We have also noted that dust, fluff and other debris tends to form a plug at the end of the radial gap between the two surfaces 30, 32 adjacent the end 34 of the shroud 29.

In the illustrated castor, in which the wheel has a diameter of 5cm, the wheel boss 26 has a diameter of about 1.25cm, and the closed bore has a depth of about 1.8cm and a diameter of about .9cm We have found that satisfactory results are obtained where there is a 0.25mm radial gap between the surfaces 30, 32 and the shroud 29 has an axial length of .5cm. It is to be understood that these dimensions, and thus the ratios they have with each other, are given merely by way of example. Nevertheless it is considered that the radial gap between the shroud and wheel boss should be about 2% of the boss diameter and the length of the shroud extending over the boss should be at least 40% of the boss diameter.

A modification of the above-described embodiment is illustrated in Figure 6, in which parts corresponding to those shown in Figure 5 have been given the same reference numerals increased by 100. The spindle mount 124 of the castor is integral with the body 112 and allows the spindle (not shown) and wheels 114 thereon (only one shown) to move substantially vertically relative to the body 112 as illustrated, by virtue of the through bore 122 of the spindle mount being substantially oval in cross-section. The internal surface 132 of the shroud 129 integrally formed with the spindle mount is also substantially oval in cross-section to allow corresponding substantially vertical movement of the wheel boss 126, the external surface 130 of which is circular in cross-section, relative to the shroud 129 in addition to rotation of the wheel boss 126 within the shroud 129. In this case it is considered that the radial gap between the shroud and wheel boss at the minimum diameter of the shroud should be about 2% of the boss diameter and as before the length of the shroud extending over the boss should be at least 40% of the boss diameter.

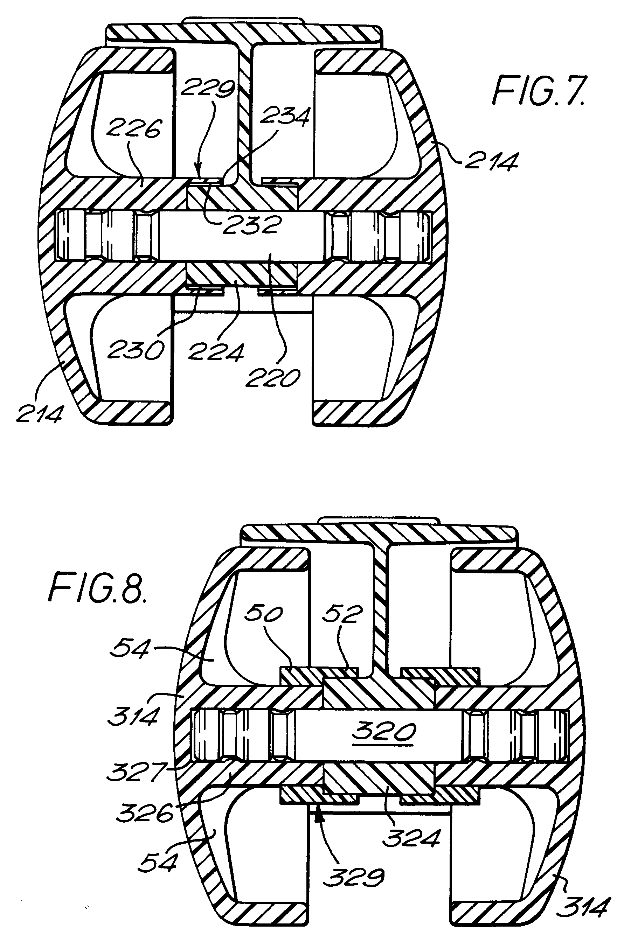

Figure 7 shows an alternative embodiment to that shown in Figures 1 to 5. In Figure 7 parts corresponding to those shown in Figure 4 have been given the same reference numerals increased by 200. In the embodiment shown in Figure 7, the shroud means 229 associated with each wheel 214 is integral with the wheel boss 226 and extends about an adjacent end portion of the spindle mount 224 from which the spindle 220 extends. As illustrated, the shroud means 229 is formed by a counterbore in the wheel boss 226 for receiving an end portion of the spindle mount. The external surface of the spindle mount end portion and the internal surface of the shroud 229 are circular in cross-section. This arrangement extends the seepage path for grease axially beyond the axial gap between the wheel boss 226 and spindle mount 224 over the spindle mount end portion between the surfaces 230 and 232 to the free end 234 of the shroud. In this case, the radial gap between the shroud and the spindle mount should be about 2% of the diameter of the wheel boss and the axial length of the shroud extending over the spindle mount should be at least 40% of the boss diameter for best results.

It will be noted that in the above described embodiments the end portion of the wheel boss adjacent the open end of the bore therein and the end portion of the spindle mount adjacent thereto are fitted one within the other, one of these end portions being provided with a counterbore to form a shroud integral with that end portion and extending over the other end portion.

Referring now to Figure 8, there is shown another embodiment. In Figure 8, parts corresponding to those shown in Figure 4 have been given the same reference numerals increased by 300. In the embodiment shown in Figure 8, the shroud means associated with each wheel 314 comprises a tubular element 329 formed separately from the wheel boss 326 and spindle mount 324. Respective end portions 50, 52 of the tubular element 329 receive an end portion of the wheel boss 326 from which the spindle 320 emerges and an end portion of the spindle mount 324 from which the spindle 320 extends. These end portions each have an external surface which is circular in cross-section and the internal surface of the end portions 50, 52 of the tubular element are each circular in cross-section. As illustrated the diameter of the external surface of the spindle mount end portion is greater than that of the external surface of the wheel boss end portion and the interior of the tubular element 329 is stepped such that the internal surfaces of the end portions 50, 52 thereof closely cooperate with these external surfaces. The stepped interior of the tubular element limits movement thereof towards the spindle mount and movement away therefrom is limited by engagement of the tubular element with the ribs 54 on the wheel 314 (or other means - not shown - provided thereon). In any event it is preferred to locate the tubular element so that it does not move axially with respect to the wheel. The tubular element is a loose fit on both the wheel boss and spindle mount. Alternatively the tubular element may be a force fit on either the wheel boss or the spindle mount but not both as it has to allow relative rotation therebetween. Preferably the tubular element is resilient. The radial gap between the tubular element and the wheel boss and/or the spindle mount should be about 2% of the diameter of the wheel boss and the length of the tubular element which forms a shroud (i.e. the length of that portion of the tubular element which has a radial gap with the wheel boss and/or the spindle mount should be at least 40% of the wheel boss diameter for best results.

Whilst the tubular element 329 may be formed of a plastics material which would not absorb grease which has seeped from between the spindle 320 and the closed bore 327 of the wheel boss 326, it is envisaged that the tubular element may be formed of a grease absorbent material, for example felt.

In the embodiment illustrated in Figure 8, it will be appreciated that the tubular element 329 extends the seepage path axially beyond the axial gap between the wheel boss 326 and spindle mount 324 over both the wheel boss and the spindle mount between the external surfaces thereof and the internal surfaces of the tubular element.

From the foregoing it will be appreciated that the shrouds provided in the illustrated castors act to confine small grease seepages from the closed bores of the wheel bosses and additionally to prevent dust, fluff and other debris adhering to such seepages. Thus, the illustrated castors allow greater tolerance in the amount of grease which is deposited in the bores during assembly of the castors prior to insertion of the spindle end portion therein.

It will also be appreciated that best results are obtained with the embodiments when the axial length of the shroud is at least 40% of the wheel boss diameter and preferably also where the radial gap between the shroud and the wheel boss and/or the spindle mount over which the shroud extends is about 2% of the wheel boss diameter.

Further, in all of the illustrated embodiments the facing surfaces of the shroud and the wheel boss and/or the spindle mount over which the shroud extends are parallel and co-axial with the axis of the spindle.

## Claims

1. A castor (10) comprising a wheel (14, 114, 214, 314) rotatably mounted to a body member (12, 112) by a spindle (20, 220, 320) which extends from a spindle mount (24, 124, 224, 324) carried by the body member (12, 112) into a closed bore (27, 327) in a central boss (26, 126, 226, 326) of the wheel, grease being provided between the closed bore of the boss and the spindle, characterized in that a shroud means (29, 129, 229, 329) shrouding the boss and/or spindle mount bridges the axial gap therebetween and extends the seepage path for said grease provided between the closed bore of the boss and the spindle.

2. A castor as claimed in claim 1, wherein the shroud means (29, 129) is integral with the spindle mount (24, 124) and extends about an end portion of the boss (26, 126) from which the spindle (20) emerges.

3. A castor as claimed in claim 2, wherein said shroud means (29, 129) is formed by a counterbore in said spindle mount (24, 124) for receiving said boss end portion.

4. A castor as claimed in claim 2 or 3 wherein said boss end portion has an external surface (130) which is circular in cross-section and said shroud means (129) has an internal surface (132) which is substantially oval in cross-section to allow substantially vertical movement of the boss end portion relative thereto.

5. A castor as claimed in claim wherein the shroud means (229) is integral with the boss (226) and extends about an end portion of the spindle mount (224) from which the spindle extends.

6. A castor as claimed in claim 5, wherein said shroud means (229) is formed by a counterbore in said boss (226) for receiving said spindle mount end portion.

7. A castor as claimed in claim 1 wherein said shroud means is a tubular element (329), respective opposite end portions (50, 52) of which receive an end portion of the boss (326) from which the spindle (320) emerges and an end portion of the spindle mount (324) from which the spindle extends.

8. A castor as claimed in claim 7, wherein said tubular element (329) is resilient.

9. A castor as claimed in claim 7 or 8, wherein said tubular element (329) is formed of a grease absorbent material.

10. A castor as claimed in any one of the preceding claims, wherein said spindle mount (24, 124, 224, 324) is integral with said body member (12, 112).

11. A castor as claimed in any one of the preceding claims wherein the shroud means (29, 129, 229, 329) has an axial length extending over said boss and/or spindle mount of at least 40% of the diameter of the wheel boss (26, 126, 226, 326).

12. A castor as claimed in any one of the preceding claims wherein there is a radial gap between the shroud means (29, 129, 229, 329) and said boss and/or spindle mount over which said shroud means extends of about 2% of the diameter of said boss.

## Patentansprüche

1. Lenkrolle (10), die ein durch eine Welle (20, 220, 320), die sich von einer durch das Gehäuseelement (12, 112) getragenen Wellenhalterung (24, 124, 224, 324) aus in eine geschlossene Bohrung (27, 327) in einer Mittelnabe (26, 126, 226, 326) des Rades erstreckt, drehbar an einem Gehäuseelement (12, 112) befestigtes Rad (14, 114, 214, 314) aufweist, wobei Schmiermittel zwischen die geschlossenen Bohrung der Nabe und die Welle eingebracht wird, **dadurch gekennzeichnet**, **daß** eine die Nabe und/oder die Wellenhalterung abdeckende Abdeckeinrichtung (29, 129, 229, 329) den axialen Spalt zwischen diesen überbrückt und den Austrittsweg für das zwischen der geschlossenen Bohrung der Nabe und der Welle eingebrachte Schmiermittel verlängert.

2. Lenkrolle nach Anspruch 1, wobei die Abdeckeinrichtung (29, 129) einstückig mit der Wellenhalterung (24, 124) ausgebildet ist und sich über einen Endabschnitt der Nabe (26, 126) erstreckt, aus der die Welle (20) austritt.

3. Lenkrolle nach Anspruch 2, wobei die Abdeckeinrichtung (29, 129) durch eine Schulterbohrung in der Wellenhalterung (24, 124) ausgebildet ist, um den Nabenendabschnitt aufzunehmen.

4. Lenkrolle nach Anspruch 2 oder 3, wobei der Nabenendabschnitt eine Außenfläche (130) hat, die im Querschnitt kreisförmig ist, und die Abdeckeinrichtung (129) eine Innenfläche (132) hat, die im wesentlichen im Querschnitt oval ist, um relativ zu dieser eine im wesentlichen vertikale Bewegung des Nabenendabschnitts zu erlauben.

5. Lenkrolle nach Anspruch 1, wobei die Abdeckeinrichtung (229) einstückig mit der Nabe (226) ausgebildet ist und sich über einen Endabschnitt der Wellenhalterung (224) erstreckt, von der aus die Welle sich erstreckt.

6. Lenkrolle nach Anspruch 5, wobei die Abdeckeinrichtung (229) durch eine Schulterbohrung in der Nabe (226) ausgebildet wird, um einen Wellenhalterungs-Endabschnitt aufzunehmen.

7. Lenkrolle nach Anspruch 1, wobei die Abdeckeinrichtung ein röhrenförmiges Element (329) ist, dessen jeweils gegenüberliegende Endabschnitte (50, 52) einen Endabschnitt der Nabe (326), aus der die Welle (320) austritt, und einen Endabschnitt der Wellenhalterung (324), von der aus sich die Welle erstreckt, aufnehmen.

8. Lenkrolle nach Anspruch 7, wobei das röhrenförmige Element (329) elastisch ist.

9. Lenkrolle nach Anspruch 7 oder 8, wobei das röhrenförmige Element (329) aus einem Material ausgebildet ist, das Schmiermittel aufsaugt.

10. Lenkrolle nach einem der vorangehenden Ansprüche, wobei die Wellenhalterung (24, 124, 224, 324) einstückig mit dem Gehäuseelement (12, 112) ist.

11. Lenkrolle nach einem der vorangehenden Ansprüche, wobei die Abdeckeinrichtung(29, 129, 229 ,329) eine axiale Länge von mindestens 40% des Durchmessers der Radnabe (26, 126, 226, 326) hat, die sich über die Nabe und/oder die Wellenhalterung erstreckt.

12. Lenkrolle nach einem der vorangehenden Ansprüche, wobei es einen radialen Spalt zwischen der Abdeckeinrichtung (29, 129, 229, 329) und der Nabe und/oder der Wellenhalterung von ungefähr 2% des Durchmessers der Nabe gibt, über den sich die Abdeckeinrichtung erstreckt.

## Revendications

1. Roulette à pivot (10) comprenant une roue (14, 114, 214, 314) fixée tournante à un élément de coque (12, 112) par une tige (20, 220, 320) qui dépasse d'un support de tige (24, 124, 224, 324) porté par l'élément de coque (12, 112) à l'intérieur d'un alésage fermé (27, 327) dans un moyeu central (26, 126, 226, 326) de la roue, un lubrifiant étant prévu entre l'alésage fermé du moyeu et la tige, caractérisée en ce qu'une enveloppe de protection (29, 129, 229, 329) protégeant le moyeu et/ou le support de tige comble l'écartement axial entre les deux et prolonge le chemin d'infiltration pour ledit lubrifiant prévu entre l'alésage fermé du moyeu et la tige.

2. Roulette à pivot selon la revendication 1, dans laquelle l'enveloppe de protection (29, 129) est réalisé d'une seule pièce avec le support de tige (24, 124) et se prolonge jusqu'à une portion d'extrémité du moyeu (26, 126) d'où la tige (20) sort.

3. Roulette à pivot selon la revendication 2, dans laquelle ladite enveloppe de protection (29, 129) est formée par un logement cylindrique dans ledit support de tige (24, 124) pour recevoir ladite portion d'extrémité du moyeu.

4. Roulette à pivot selon la revendication 2 ou 3, dans laquelle ladite portion d'extrémité du moyeu a une surface externe (130) qui est circulaire transversalement et ladite enveloppe de protection (129) a une surface interne (132) qui est essentiellement ovale transversalement pour permettre un mouvement essentiellement vertical de la portion d'extrémité du moyeu par rapport à celle-ci.

5. Roulette à pivot selon la revendication 1, dans laquelle l'enveloppe de protection (229) est réalisé d'une seule pièce avec le moyeu (226) et se prolonge sur une portion d'extrémité du
support de tige (224) d'où la tige dépasse.

6. Roulette à pivot selon la revendication 5, dans laquelle ladite enveloppe de protection (229) est formée par un logement cylindrique dans ledit moyeu (226) pour recevoir ladite portion d'extrémité du support de tige.

7. Roulette à pivot selon la revendication 1, dans laquelle ladite enveloppe de protection est un élément tubulaire (329), dont les portions d'extrémité opposées respectives (50, 52) reçoivent une portion d'extrémité du moyeu (326) d'où la tige (320) sort et une portion d'extrémité du support de tige (324) d'où la tige dépasse.

8. Roulette à pivot selon la revendication 7, dans laquelle ledit élément tubulaire (329) est élastique.

9. Roulette à pivot selon la revendication 7 ou 8, dans laquelle ledit élément tubulaire (329) est fait à partir d'une matière absorbant le lubrifiant.

10. Roulette à pivot selon l'une quelconque des revendications précédentes, dans laquelle ledit support de tige (24, 124, 224, 324) est réalisé d'une seule pièce avec ledit élément de coque (12, 112).

11. Roulette à pivot selon l'une quelconque des revendications précédentes, dans laquelle l'enveloppe de protection (29, 129, 229, 329) a une longueur axiale se prolongeant sur ledit moyeu et/ou le support de tige correspond au moins à 40 % du diamètre du moyeu de la roue (26, 126, 226, 326).

12. Roulette à pivot selon l'une quelconque des revendications précédentes, dans laquelle il y a un écartement radial entre l'enveloppe de protection (29, 129, 229, 329) et ledit moyeu et/ou le support de tige sur lequel ladite enveloppe de protection se prolonge sur environ 2 % du diamètre dudit moyeu.
